Europäisches Patentamt

European Patent Office

Office européen des brevets

(11) Veröffentlichungsnummer: **0 272 522**
**A1**

## EUROPÄISCHE PATENTANMELDUNG

(21) Anmeldenummer: 87118031.1

(22) Anmeldetag: 05.12.87

(51) Int. Cl.4: **F01B 9/02** , F02B 75/04

(30) Priorität: 08.12.86 DE 3641884
13.12.86 DE 3642681

(43) Veröffentlichungstag der Anmeldung:
29.06.88 Patentblatt 88/26

(84) Benannte Vertragsstaaten:
AT BE CH DE ES FR GB IT LI NL SE

(71) Anmelder: Dipl.-Wirtsch.-Ing. Michael Schenk
Johannes-Kepler-Strasse 8
D-7312 Kirchheim/Teck(DE)

(72) Erfinder: Dipl.-Wirtsch.-Ing. Michael Schenk
Johannes-Kepler-Strasse 8
D-7312 Kirchheim/Teck(DE)

(74) Vertreter: Patentanwälte Phys. Bartels
Dipl.-Ing. Fink Dr.-Ing. Held
Lange Strasse 51
D-7000 Stuttgart 1(DE)

(54) **Kurbeltrieb, insbesondere für Hubkolbenmotoren.**

(57) Bei einem Kurbeltrieb, insbesondere für Hubkolbenmaschinen, mit einer Hauptachse (12) und mit wenigstens einer Pleuelstange (1), deren einer Endabschnitt sich auf einer geradlinigen Bahn bewegt und deren anderer Endabschnitt eine Drehachse aufweist, die sich längs einer in sich geschlossenen Bahn bewegt, hat die Bahn der Drehachse (1') einen veränderlichen Abstand von der Hauptachse.

Fig.1

EP 0 272 522 A1

## Kurbeltrieb, insbesondere für Hubkolbenmotoren

Die Erfindung betrifft einen Kurbeltrieb, insbesondere für Hubkolbenmotoren, welcher die Merkmale des Oberbegrriffs des Anspruches 1 aufweist.

Bei den bekannten Kurbeltrieben dieser Art, wie sie beispielsweise bei allen Hubkolben-Verbrennungsmotoren Verwendung finden, wird die Drehachse des dem Kolben abgekehrten Endes der Pleuelstange durch einen zylindrischen Kurbelzapfen gebildet, dessen beiden Endabschnitte fest mit zwei Wangen verbunden ist, die ihrerseits fest mit Hauptwellzapfen verbunden sind, welche die Hauptachse des Kurbeltriebes bilden. Die Drehachse der PLeuelstange bewegt sich daher auf einer konzentrisch zur Hauptachse des Kurbeltriebes liegenden Kreisbahn, deren Durchmesser gleich dem Hub des sich auf einer geradlinigen Bahn bewegenden Endabschnittes der Pleuelstange, bei einer Verbindung mit einem Kolben einer Hubkolbenmaschine also gleich dem Hub des Kolbens ist.

Der Erfindung liegt die Aufgabe zugrunde, einen Kurbeltrieb zu schaffen, der besser als die bekannten Kurbeltriebe in seiner Charakteristik auf die auftretenden Anforderungen abgestimmt werden kann. Diese Aufgabe löst ein Kurbeltrieb mit der Merkmalen des Anspruches 1.

Der veränderliche Abstand der Bahn der Drehachse von der Hauptachse des Kurbeltriebes ermöglicht eine Änderung von dessen Drehmomentcharakteristik. Dies ist beispielsweise bei Hubkolben-Verbrennungsmotoren von Interesse, um während des Arbeitshubes ein höheres Drehmoment zu erhalten, was, sofern die übrigen Bedingungen unverändert bleiben, erforderlich macht, zumindest während eines Teiles des Arbeitshubes einen vergrößerten wirksamen Hebelarm des Kurbeltriebes zur Verfügung zu haben. Eine auf diese Weise verbesserte Drehmomentcharakteristik des Kurbeltriebes führt bei einem Hubkolben-Verbrennungsmotor zu einem höheren Drehmoment, wodurch einerseits eine Kraftstofferparnis erreichbar ist und andererseits bei gleichbleibender Leistung das Motorgewicht reduziert werden kann, was zu geringeren Kosten und bei Fahrzeugen wegen der geringeren zu bewegenden Masse zu einer Treibstoffeinsparung führt. Der veränderliche Abstand der Drehachse der Pleuelstange von der Hauptachse des Kurbeltriebs eröffnet aber auch die Möglichkeit, den Hub zu verändern, also beispielsweise in Verbindung mit einem Hubkolben-Verbrennungsmotor bei unterschiedlichen Drehzahlen oder unterschiedlichen Belastungen einen unterschiedlich großen Kolbenhub zu wählen.

Die Realisierung eines veränderlichen Abstandes der Drehachse des sich auf einer geschlossenen Bahn bewegenden Endabschnittes der Pleuelstange von der Hauptachse ist mit unterschiedlichen Mitteln möglich.

Bei einer wegen ihrer Einfachheit und geringen Abweichung von den bekannten Kurbeltrieben besonders vorteilhaften Ausführungsform ist die Drehachse durch den Kurbelzapfen einer Kurbelwelle gebildet, der mit einem zur dem die Pleuelstange tragenden Abschnitt exzentrischen Abschnitt drehbar in wenigstens einer Kurbelwange gelagert ist, wobei auf diesem drehbar gelagerten Abschnitt drehfest ein erstes Rad angeordnet ist, das mit einem koaxial zur Hauptachse angeordneten zweiten Rad in Getriebeverbindung steht. Hier bedarf es nur eines Verdrehens des exzentrischen Kurbelzapfens in seinem durch die Wange oder Wangen gebildeten Lager, um den Abstand der Drehachse der Kurbelstange, welche hier mit der Längsachse des sie tragenden Abschnittes des Kurbelzapfens zusammenfällt, von der Hauptachse zu verändern, wobei der Verstellbereich durch die Exzentrizität des die Kurbelstange tragenden Abschnittes des Kurbelzapfens bezüglich seines drehbar in der Wange oder den Wangen gelagerten Abschnittes bestimmt ist, die allerdings entsprechend den Erfordernissen frei gewählt werden kann. Ist das zweite Rad feststehend, was beispielsweise dadurch realisiert werden kann, daß man es drehfest mit einem Hauptlager der Kurbelwelle verbindet, dann bestimmt das Übersetzungsverhältnis der Getriebeverbindung, welche die beiden Räder bildet, die Winkelstellung des exzentrischen Kurbelzapfens in Abhängigkeit von der Winkelstellung der Kurbelwelle. Man kann aber auch das zweite Rad drehfest auf einer koaxial zur Hauptachse angeordneten, beispielsweise in den hohl ausgebildeten Hauptwellenzapfen gelagerten Hilfswelle anordnen und hat dann nicht nur die Möglichkeit, beliebig wählbare Zusammenhänge zwischen den Winkelstellungen des exzentrischen Kurbelzapfens und der Kurbelwelle vorzugeben, sondern auch den Hub zu verändern. Im letztgenannten Falle braucht nur der gewünschte Abstand zwischen der Drehachse der Pleuelstange und der Hauptachse der Kurbelwelle durch eine Verdrehung des exzentrischen Kurbelzapfens auf den gewünschten Wert eingestellt und dann dadurch beibehalten zu werden, daß diese Winkellage des drehfest mit dem Kurbelzapfen verbundenen Rades aufrecht erhalten wird.

Einen veränderlichen Abstand der Drehachse der Pleuelstange von der Hauptachse läßt sich beispielsweise auch mit Hilfe einer stillstehenden Führungsbahn verwirklichen, längs deren die Drehachse eine Zwangsführung erfährt. Mit dem Pleuel muß dann schwenkbar ein Kurbelarm verbunden sein, der eine sich selbst auf den durch die Führungsbahn bestimmten Abstand der Drehachse von der Hauptachse einstellende effektive Länge hat. Beispielsweise kann zu diesem Zweck der Kurbelarm, bei dem es sich selbstverständlich auch um eine Wange oder Scheibe handeln kann, mit einem sich in der Längserstreckung des Kurbelarms verlaufenden Schlitz versehen sein, in dem ein die Pleuelstange mit dem Kurbelarm verbindender Zapfen verschiebbar geführt ist. Die Führungsbahn kann durch einen ortsfesten Körper, beispielsweise durch einen Teil eines den Kurbeltrieb aufnehmenden Gehäuses, gebildet sein. Selbstverständlich kann auch eine Verstellbarkeit des die Führungsbahn bildenden Körper in Betracht gezogen werden.

Statt einer derartigen Führungsbahn kann ein Kurbelarm vorgesehen werden, der aus wenigstens zwei in seiner Längsrichtung relativ zueinander verschiebbaren Teilen besteht. An diesen Teilen oder an der Hauptachse und an der Drehachse der Pleuelstange greift hierbei ein längenveränderbares Stellelement an, das die effektive Länge des Kurbelarms und damit den Abstand der Drehachse von der Hauptachse bestimmt. Bei dem Stellelement kann es sich beispielsweise um einen Hydraulikzylinder handeln, welcher über Verbindungsleitungen an eine Steuereinrichtung angeschlossen ist.

Eine andere Möglichkeit, den Abstand der Drehachse von der Hauptachse zu verändern, bietet ein Hebelgetriebe, insbesondere ein Mehrgelenk-Hebelgetriebe. So kann man beispielsweise die Drehachse der Kurbelstange über einen Hebel mit einem Kurbelzapfen verbinden, der sich auf einer zur Hauptachse konzentrischen Kreisbahn bewegt und den Winkel, den die Pleuelstange mit diesem Hebel einschließt, mit Hilfe eines Hilfskurbeltriebes steuern, dessen Pleuelstange an dem genannten Hebel oder der mit ihm gelenkig verbunden Pleuelstange angreift. Eine derartige Lösung bietet den Vorteil, daß die zur Abstützung des Hebels erforderliche Kraft mittels des Hilfskurbeltriebes in ein Drehmoment umgewandelt wird, das zu dem Drehmoment des Hauptkurbeltriebes addiert werden kann. Vor allem bei Mehrzylindermaschinen ergibt sich hierbei ein weniger komplizierter Aufbau als bei einer Abstützung des Hebels am Gehäuse.

Eine weitere Möglichkeit, einen veränderlichen Abstand zwischen der Drehachse der Pleuelstange und der Hauptachse zu realisieren, besteht in der Verwendung von zwei gegeneinander laufenden elliptischen Zahnrädern, von denen das eine mit der Hauptachse und das andere mit der Drehachse der Kurbelstange verbunden ist.

Unabhängig davon, welche konstruktive Lösung zur Realisierung eines veränderlichen Abstandes zwischen der Drehachse der Pleuelstange und der Hauptachse verwendet wird, kann man den Kurbelarm, an dem die Pleuelstange angreift, als eine kreisförmige Scheibe ausbilden, die im Bereich ihrer äußeren Randzone von einer sie in axialer Richtung abstützenden Führungseinrichtung geführt ist. Eine derartige Lagerung des dem Kurbelarm oder die Kurbelwange bildenden Teils läßt praktisch vollkommen eine Biegewechselbeanspruchung des Kurbelarms und des Pleuelzapfens vermeiden.

Der Kurbelarm kann deshalb als eine relativ dünne Scheibe ausgebildet sein. Es kann sogar genügen, eine Ringscheibe vorzusehen, weil die Lagerung am Umfang den zentralen Bereich entbehrlich macht. Das Gewicht des Kurbeltriebes läßt sich deshalb durch eine solche Lagerung des Kurbelarmes wesentlich gegenüber dem Gewicht der bekannten Kontruktionen reduzieren. Durch den Wegfall der Biegewechselbeanspruchung kann man außerdem problemlos den Kurbelzapfen lösbar mit dem ihn tragenden Kurbelarm verbinden. Hierdurch kann der Zusammenbau der Kurbelwelle sowie auch die Demontage und der Ersatz unbrauchbar gewordener Teile leichter ausgeführt werden. In vielen Fällen wird es sogar möglich sein, diese Arbeiten im' offenen Kurbelgehäuse auszuführen. Hinzukommt, daß bei einer notwendig werden den Reparatur nicht die gesamte Kurbelwelle ersetzt werden muß, was vor allem bei sehr großen Kurbelwellen ein erheblicher Vorteil ist.

Bei einer Lagerung des durch eine Scheibe gebildeten Kurbelarms längs der äußeren Randzone der Scheibe braucht der An-oder Abtrieb nicht über die Hauptachse zu erfolgen. Man kann beispielsweise axial neben der Lagerfläche der Scheibe einen Zahnkranz vorsehen, mit dem ein Zahnrad kämmt, über das der An-oder Abtrieb erfolgt. Natürlich können mehrere solcher Zahnräder vorgesehen sein, die dann über den Umfang verteilt angeordnet sind. Man kann auch neben einem solchen Zahnrad eine Lagerrolle anordnen, welche die Scheibe abstützt. Eine andere Möglichkeit des An-und Abtriebes besteht darin, an der Scheibe ein Kettenrad vorzusehen, über das eine endlose Kette, insbesondere eine Rollenkette, geführt ist. Weist der Kurbeltrieb mehrere Kurbelarme auf und ist jeder dieser Kurbelarme mit einem solchen An-oder Abtrieb versehen, kann man über diese An-oder Abtriebe einen Synchronisierungseffekt erreichen, was die Beanspruchung der Kurbelarme noch weiter reduziert.

Ist der Kurbelarm oder jeder Kurbelarm durch eine im Bereich ihrer äußeren Randzone gelagerte Scheibe gebildet, dann ist für jede Pleuelstange nur eine Scheibe erforderlich. Dies ermöglicht eine einfache Montage und, insbesondere die Verwendung einer Pleuelstange mit einem ungeteilten Lager für den Kurbelzapfen. Ferner kann eine deartige Scheibe in einer Ebene liegen, die mit der geradlinigen Bewegungsbahn des mit dem Kolben verbundenen Pleuelstangenendes einen spitzen Winkel einschließt. Sind mehrere über den Umfang der Scheibe verteilt angeordnete Wellen vorhanden, welche die Führungs-und Lagerelemente für die Scheibe tragen, können diese Wellen axial verstellbar sein, um die Neigung der Scheibe verändern und einstellen zu können.

Da für den An-oder Abtrieb der Scheibe kein fest mit ihr verbundener Wellenzapfen erforderlich ist, kann die Scheibe die Form einer Ringscheibe haben. Ferner kann die Scheibe zumindest dann, wenn sie keiner Biegebeanspruchung ausgesetzt ist. aus keramischem Material oder einem anderen Material bestehen, das im Bereich der Lagerstellen der Scheibe keine Ölschmierung benötigt.

Im folgenden ist die Erfindung anhand von in der Zeichnung dargestellten Ausführungsbeispielen im einzelnen erläutert.

Es zeigen

Fig. 1 einen unvollständig dargestellten Schnitt eines ersten Ausführungsbeispiels,

Fig. 2 die Bahnen der Längsachse des die Pleuelstange tragenden Abschnittes des Kurbelzapfens und dessen in den Wangen gelagerten Abschnittes in Abhängigkeit von der Position des sich auf einer geradlinigen Bahn bewegenden anderen Endabschnittes der Pleuelstange,

Fig. 3 die Bahn der Drehachse der Pleuelstange des ersten Ausführungsbeispiels bei einem anderen Übersetzungsverhältnis des die Winkelstellung des Kurbelzapfens bestimmenden Getriebes,

Fig. 4 den Drehmomentverlauf beim ersten Ausführungsbeispiel im Vergleich zum Drehmomentverlauf bei anderen Bahnen der Drehachse der Pleuelstange,

Fig. 5 einen Längsschnitt eines zweiten Ausführungsbeispiels,

Fig. 6 eine schematische Darstellung eines dritten Ausführungsbeispiels,

Fig. 7 einen schematischen Längsschnitt des dritten Ausführungsbeispiels,

Fig. 8 eine schematische Darstellung eines vierten Ausführungsbeispiels,

Fig. 9 eine schematischen Darstellung eines fünften Ausführungsbeispiels und der Bahn der Drehachse der Pleuelstange bei diesem Ausführungsbeispiel.

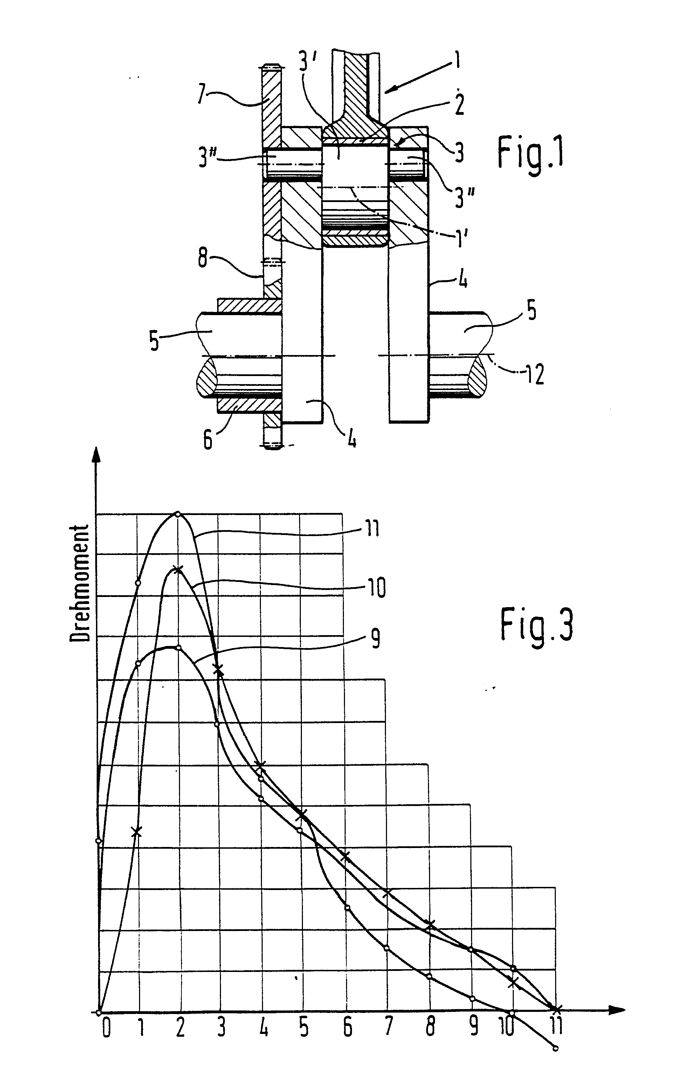

Ein Kurbeltrieb weist eine in bekannter Weise ausgebildete Pleuelstange 1 auf, die im Bereich ihres nicht dargestellten, sich auf einer geradlinigen Bahn hin und her bewegenden Endabschnittes beispielsweise mit dem Kolben eines Hubkolben-Verbrennungsmotors in bekannter Weise verbunden ist. Der andere, in Fig. 1 dargestellte Endabschnitt enthält in einer Bohrung eine Lagerbuchse 2, mittels deren die Pleuelstange 1 drehbar auf einem Mittelabschnitt 3' eines als Ganzes mit 3 bezeichneten, exzentrischen Kurbelzapfens gelagert ist. Die Längsachse der Lagerbuchse 2 und die mit ihr zusammenfallende Längsachse des Mittelabschnittes 3' definieren die Drehachse 1' der Pleuelstange 1. Exzentrisch zum Mittelabschnitt 3' des Kurbelzapfens 3 schließen sich an diesen beidseitig zwei zylindrische, gleichachsige Endabschnitte 3" an. Diese Endabschnitte 3" sind in mit einander fluchtenden Bohrungen von zwei Wangen 4 des Kurbeltriebes gelagert, zwischen die der auf dem Mittelabschnitt 3' gelagerte Endaschnitt der Pleuelstange 1 eingreift. Die im Ausführungsbeispiel plattenförmig ausgebildeten Wangen 4 sind fest mit zwei mit einander fluchtenden Hauptwellenzapfen 5 der Kurbelwelle des Kurbeltriebes verbunden. Im Ausführungsbeispiel ist nur der links dargestellte Hauptwellenzapfen in einem Lager 6 drehbar gelagert, weil sich an den anderen Hauptwellenzapfen 5 ein nicht dargestellter Teil der Kurbelwelle anschließt. Würde die Kurbelwelle nur die beiden dargestellten Wangen 4 aufweisen, dann wäre auch der andere Hauptwellenzapfen 5 in einem Lager 6 drehbar gelagert.

Wie Fig. 1 zeigt, steht derjenige Endabschnitt 3" des Kurbelzapfens 3, welche in der sich an das Lager 6 anschließenden Wange 4 drehbar gelagert ist, über diese Wange 4 über und trägt ein fest mit ihm verbundenes Stirnzahrad 7, das mit einem zweiten Stirnzahnrad 8 kämmt, welches konzentrisch zum Hauptwellenzapfen 5 angeordnet und fest mit dem ortsfesten Lager 6 verbunden ist.

Im Ausführungsbeispiel ist das Übersetzungsverhältnis des aus den beiden Zahnrädern 7 und 8 gebildeten Getriebes 1 : 1. Das Stirnzahnrad 7, das sich bei einer Drehung der Kurbelwelle auf dem feststehenden zweiten Stirnzahnrad 8 abwälzt und dabei den Kurbelzapfen 3 dreht, führt deshalb bei einer Drehung der Hauptwellenzapfen 5 um 360° ebenfalls eine Drehung um die Längsachse der beiden Endabschnitte 3" um 360 ° aus. Der wirksame Hebelarm des Kurbeltriebes, der durch den Abstand der Drehachse 1' der Pleuelstange 1 und damit der Längsachse des Mittelabschnitts 3' des Kurbelzapfens 3 von der durch die Längsachse der Hauptwellenzapfen 5 definierten Hauptachse 12 des Kurbeltriebes bestimmt ist, verändert sich also bei jeder Drehung der Hauptwellenzapfen 5 kontinuierlich.

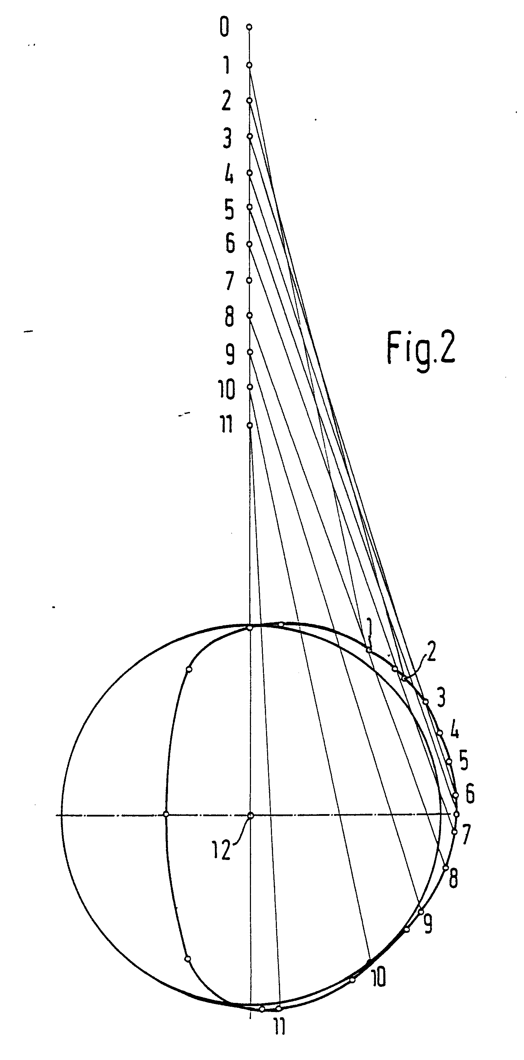

Fig. 2 zeigt im Vergleich zu der kreisförmigen Bahn der Längsachse der beiden Endabschnitte 3" des Kurbelzapfens 3 die Bahn, welche die Drehachse der Kurbelwelle 1 um die Hauptachse 12 beschreibt, wobei die durch die Zahlen 1 bis 11 gekennzeichneten Positionen den ebenfalls mit den Zahlen 1 bis 11 gekennzeichneten Positionen des anderen, sich auf einer geradlinigen Bahn bewegenden Endabschnittes der Pleuelstange 1 angeben.

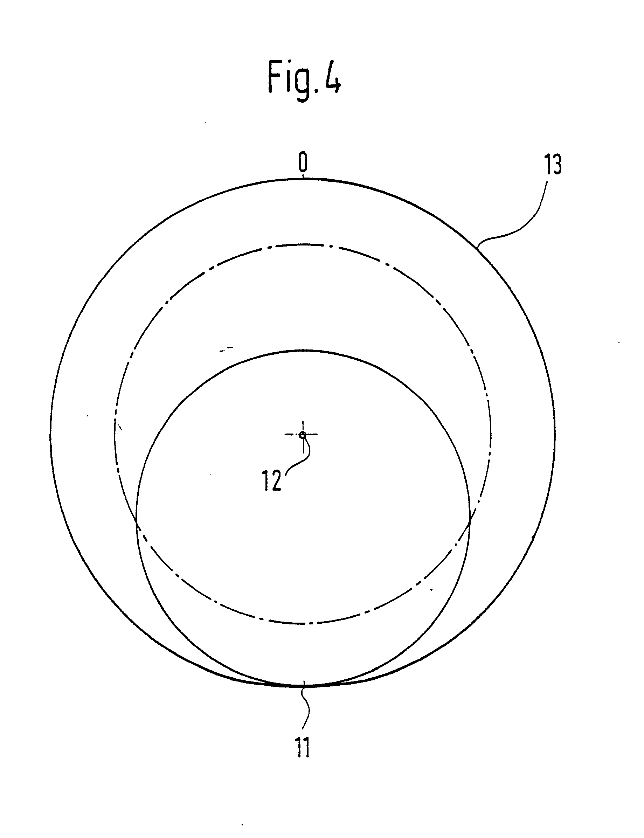

Die beim ersten Ausführungsbeispiel vorhandene Abweichung der Bahn der Drehachse der Pleuelstange 1 mit einer Kreisbahn mit einem Durchmesser gleich dem Hub führt, wie Fig. 3 zeigt, zu einem anderen Drehmomentverlauf. Die Kurve 9 in Fig. 3 zeigt die Abhängigkeit des Drehmomentes von der Stellung des sich auf einer geradlinigen Bahn bewegenden Endes der Pleuelstange bei einem bestimmten Druckverlauf eines Viertaktmotors für den Fall, daß die Drehachse 1' der Pleuelstange 1 sich auf einer Kreisbahn mit dem Durchmesser gleich dem Hub bewegt, der Kurbeltrieb also in bekannter Weise ausgebildet ist. Bei gleichem Druckverlauf und gleichem Hub ergibt die in Fig. 2 dargestellte Bahn der Drehachse 1' der Pleuelstange 1 einen Drehmomentverlauf gemäß der Kurve 10. Ein Vergleich zeigt, daß die von der Kurve 10 begrenzte Fläche größer ist als die von der Kurve 9 begrenzte, was bedeutet, daß das mittlere Drehmoment mit einem Kurbeltrieb gemäß dem ersten Ausführungsbeispiel größer ist als das Drehmoment bei Verwendung eines bekannten Kurbeltriebes.

Die in Fig. 3 dargestellte Kurve 11 zeigt den Drehmomentverlauf eines nicht dargestellten Kurbeltriebes, bei dem sich die Drehachse der Pleuelstange längs einer Bahn bewegt, die die Form einer Ellipse hat deren große Halbachse um 45° gegenüber der geradlinigen Bahn geneigt ist, auf der sich der andere Endabschnitt der Pleuelstange bewegt. Die große Halbachse dieser Ellipse ist doppelt so groß wie die kleine Halbachse. Ferner hat der Hub die gleiche Größe wie bei dem Ausführungsbeispiel gemäß Fig. 1.

Haben die beiden Zahnräder 7 und 8 ein Übersetzungsverhältnis von 1 : 2, hat also das Zahnrad 7 eine doppelt so große Zähnezahl wie das Zahnrad 8, dann bewegt sich die Drehachse 1' der Pleuelstange 1 auf der in Fig. 4 mit einer ausgezogenen Linie dargestellten Kurve 13. Der in Fig. 4 strichpunktiert dargestellte, zur Achse 12 konzentrische Kreis läßt erkennen, in welchem Maße bei einem derartigen Übersetzungsverhältnis der Hub und der wirksame Radius des Kurbelarmes vergrößert wird. Der Beginn des Arbeitshubes ist in Übereinstimmung mit der Bezifferung der entsprechenden Kurve in Fig. 2 mit der Zahl 0, das Ende mit der Zahl 11 gekennzeichnet. Aber auch dann, wenn man den Kurbeltrieb so ausbildet, daß der Hub nicht vergrößert wird, ergibt sich eine Vergrößerung der effektiven Kurbelarmlänge während des Arbeitshubes gegenüber den bekannten Kurbeltrieben mit konstantem Abstand zwischen der Drehachse der Kurbelstange und der Hauptachse.

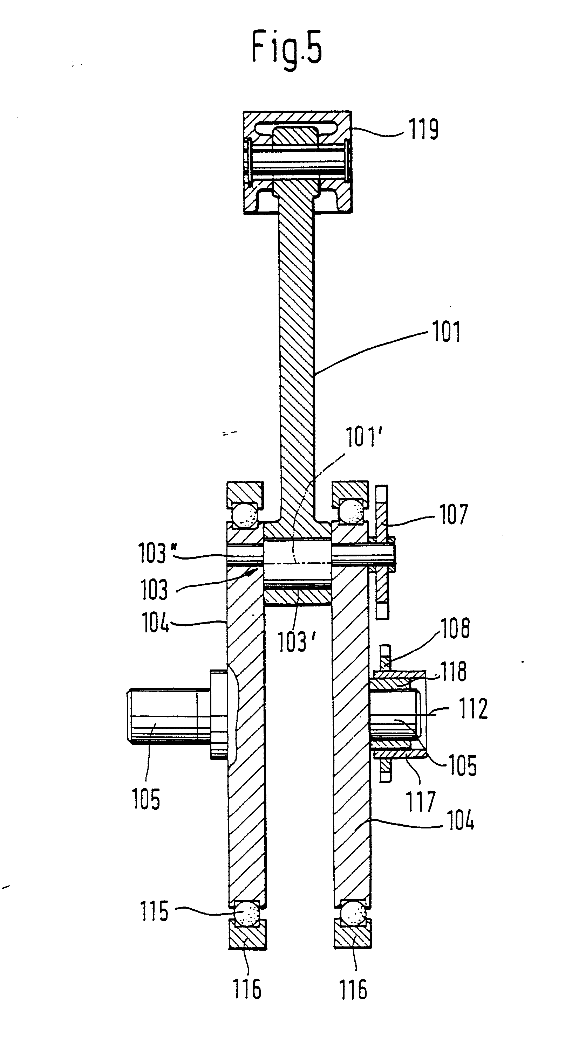

Bei dem in Fig. 5 dargestellten Ausführungsbeispiel sind die beiden Wangen 104 je als eine kreiszylindrische Scheibe ausgebildet. Diese bieden Scheiben sind an ihrem Umfang drehbar auf Kugeln 115 gelagert, die in einer in die Außenmantelfläche eingearbeiteten Ringnut laufen. Andererseits laufen die Kugeln 115 in je einem Lageraußenring 116, welcher die zugeordnete Wange 104 konzentrisch umgibt und in dem nicht dargestellten Kurbelgehäuse axial unverschiebbar festgelegt ist. Die beiden Wangen 104 sind mit je einem Wellenzapfen 105 fest verbunden. Diese Wellenzapfen 105 sind je in einer Lagerbuchse 118 drehbar gelagert, von denen nur eine in Fig. 5 dargestellt ist.

Der Kurbelzapfen 103 hat wie bei dem Ausführungsbeispiel gemäß Fig. 1 einen zu seinen drehbar in den Wangen 104 gelagerten Endabschnitten 103" exzentrischen Mittelabschnitt 103'. Die Längsachse des Mittelabschnittes 103' bildet die Drehachse 101' der Pleuelstange 101, die an ihrem anderen Ende üblicherweise mit einem Kolben 119 verbunden ist.

Der Drehantrieb für den Kurbelzapfen 103 weist, wie Fig. 5 zeigt, ein drehfest auf dem einen Endabschnitt 102' des Kurbelzapfens 103 sitzendes Kettenrad 107 sowie ein Kettenrad 108 auf, das drehfest auf einer drehbar gelagerten Hohlwelle 117 angeordnet ist, jedoch auch drehfest auf der Lagerbuchse 118 angeordnet sein könnte. Über die beiden Kettenrädern 107 und 108 läuft eine nicht dargestellte, endlose Rollenkette. Selbstverständlich könnte ein solcher Kettenantrieb auch bei dem Ausführungsbeispiel gemäß Fig. 1 vorgesehen sein, wie bei dem Ausführungsbeispiel gemäß Fig. 5 auch miteinander kämmende Zahnräder verwendet werden könnten. Das Übersetzungsverhältnis der beiden Kettenräder 107 und 108 ist im Ausführungsbeispiel 1 : 1, könnte aber auch beispielsweise 1 : 2 oder anders gewählt sein. Bei einem Hub von beispielsweise 88 mm und einer Exzentrizität von 15 mm läßt sich bei einem Übersetzungsverhältnis von 1 : 1 gegenüber einem konstanten Abstand der Drehachse 103' von der Hauptachse 112 die Drehmomentausbeute um etwa 40 % vergrößern.

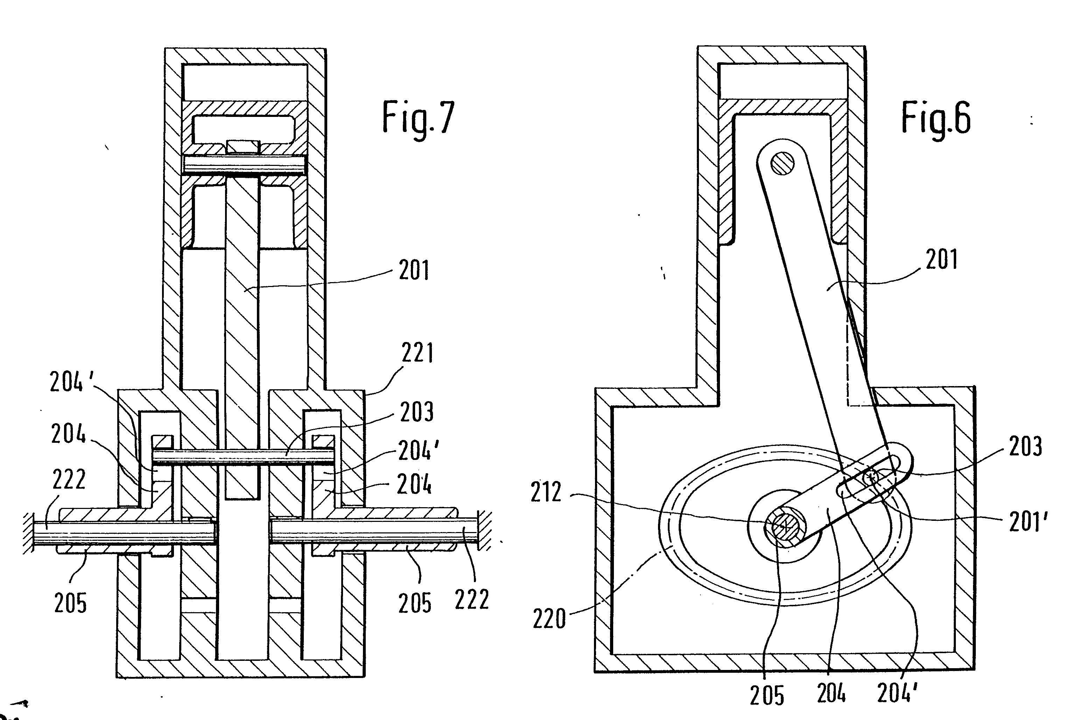

Der erfindungsgemäße Kurbeltrieb gemäß den Fig. 6 und 7 weist eine ortfeste, elliptische Führungsbahn 220 für den Kurbelzapfen 203 auf, dessen Längsachse die Drehachse 201' der Pleuelstange 201 bildet. Wie Fig. 7 zeigt, weist das Gehäuse 221 des Kurbeltriebes zwei ebene Wandteile auf, zwischen die dasjenige Ende der Pleuelstange 201 eingreift, das vom Kurbelzapfen 203 durchdrungen ist. Diese beiden Wandteile sind mit einem sie durchdringenden Schlitz versehen. Die beiden deckungsgleichen Schlitze bilden eine Führungsbahn 220 für den Kurbelzapfen 203. Die beiden innerhalb des Schlitzes liegenden Wandbereiche sind fest mit je einem Bolzen 222 verbunden, der außerhalb des Gehäuses 221 mit diesem fest verbunden ist. Die beiden Bolzen 222 durchdringen je einen als Hohlwelle ausgebildeten und die Hauptachse 212 definierenden Hauptwellenzapfen 205, welcher im Inneren des Gehäuses 221 je einen Kurbelarm 204 trägt. Die beiden Kurbelarme 204 sind mit einem Längsschlitz 204' versehen, der sich in der Längsachse des Kurbelarmes 204 erstreckt. Die beiden Endabschnitte des Kurbelzapfens 203 greifen in die beiden Längsschlitze 204' ein. Durch diese Schlitze-Zapfen-Verbindung zwischen der Pleuelstange 201 und dem Kurbelarm 204 kann sich dessen effektive Länge selbsttätig an den durch die Führungsbahn 220 vorgegebenen Wert anpassen.

Selbstverständlich kann die Führungsbahn 220 auch einen anderen, von einer Ellipse abweichenden Verlauf haben. Die Führungsbahn 220 braucht auch nicht in einer Ebene zu liegen, welche parallel zu der Mittelebene des Gehäuses 221 liegt, in welcher sich die Pleuelstange 201 bewegt.

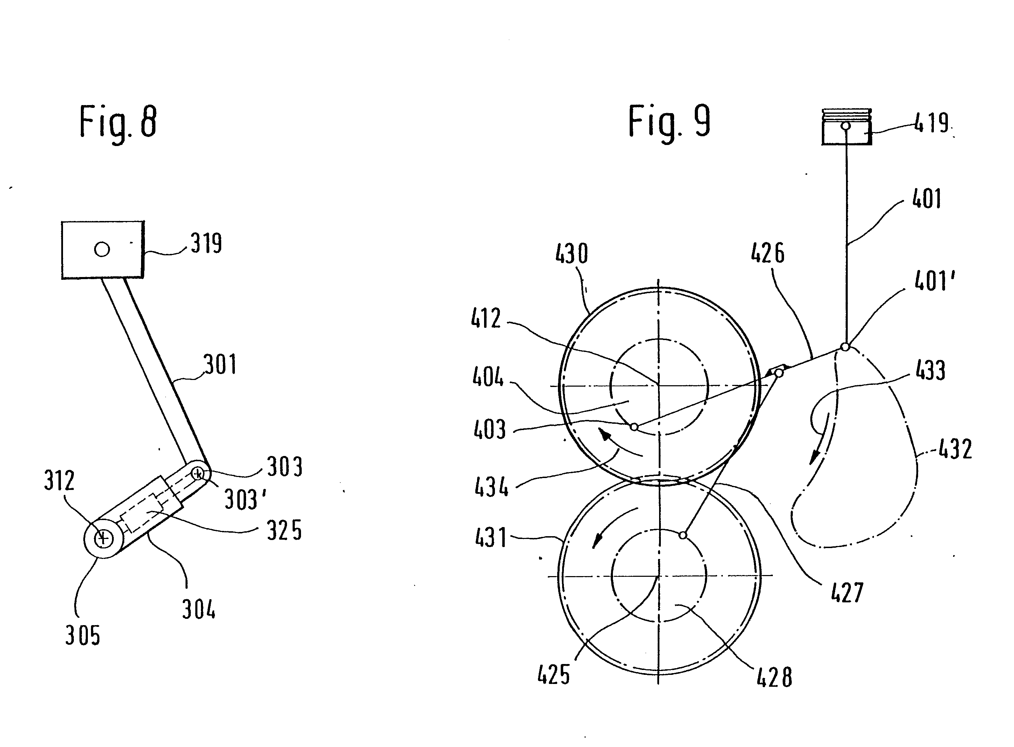

Um die Notwendigkeit einer ortsfesten Führungsbahn zu vermeiden, ist bei dem Ausführungsbeispiel gemäß Fig. 8 der Kurbelarm 304 so ausgebildet, daß seine effektive Länge mit Hilfe eines Stellelementes 325 verändert werden kann. Der hohl ausgebildete Kurbelarm 304 besteht zu diesem Zwecke aus zwei in Armlängsrichtung relativ zueinander verschiebbaren Teilen, von denen der eine fest mit dem die Hauptachse 312 definierenden Hauptwellenzapfen 305 verbunden und der andere den Kurbelzapfen 303 trägt, auf dem das eine Ende der Pleuelstange 301 auf die Drehachse 301' drehbar gelagert ist. Das andere Ende der Pleuelstange 301 ist in bekannter Weise - schwenkbar mit einem Kolben 319 verbunden.

Das im Inneren des teleskopartig längenveränderbaren Kurbelarms 304 angeordnete Stellelement 325 ist ein Hydraulikzylinder, der einerseits mit dem Hauptwellenzapfen 305 und andererseits mit dem Kurbelzapfen 303 verbunden ist. Die Zufuhr and Abfuhr von Hydraulikflüssigkeit zum Verstellelement 325 erfolgt durch den hohl ausgebildeten Haupwellenzapfen 305 hindurch. Innerhalb des Längenverstellbereiches kann durch eine Zufuhr von Hydraulikflüssigkeit die wirksame Länge des Kurbelarmes 304 vergrößert und durch eine Ableitung von Hydraulikflüssigkeit verkleinert werden.

Bei dem in Fig. 9 dargestellten Ausführungsbeispiel des erfindungsgemäßen Kurbeltriebes ist die Pleuelstange 401, die an ihrem einen Ende in bekannter Weise mit einem Kolben 419 verbunden ist, an ihrem andere Ende an einer Hebel 426 angelenkt, der andererseits auf dem Kurbelzapfen 403 des Kurbeltriebes gelagert ist. Dieser Kurbelzapfen 403 wird wie bei dem Ausführungsbeispiel genäß Fig. 1 von zwei Wangen getragen, von denen in Fig. 9 nur die eine - schematisch als Scheibe 404 dargestellt ist. Die Hauptachse, um welche sich die Wangen 404 drehen, ist mit 412 bezeichnet. Zu ihr parallel liegen der Kurbelzapfen 403, die Schwenkachse 401' oder Kurbelstange 401 und die Achse von deren Verbindung mit dem Kolben 419.

Wie Fig. 9 zeigt, ist an den Hebel 426 im Abstand von der Drehachse 401' eine Hilfspleuelstange 427 eines Hilfskurbeltriebes angelenkt, und zwar mit einer zur Drehachse 401' parallelen Achse. Die Hilfspleuelstange 427, welche den Hebel 426 von der dem Kolben 419 abgekehrten Seite her abstützt und in der durch die Pleuelstange 401 und den Hebel 426 definierten Ebene liegt, ist andererseits an eine oder zwei Kurbelwangen 428 des Hilfskurbeltriebes angelenkt. Im Ausführungsbeispiel ist der wirksame, konstante Radius der Kurbelwange 428 gleich dem wirksamen, konstanten Radius der Kurbelwangen 404. Außerdem liegt die Ebene, welche von der Hauptachse 412 des Kurbeltriebes und der Hauptachse 429 des Hilfskurbeltriebes definiert wird, parallel zur Längsachse des Kolbens 419.

Auf den Hauptachsen 412 und 429 drehfest angeordnet oder drehfest mit den Wangen 404 und 428 verbunden sind zwei Zahnräder 430 bzw. 431, die miteinander kämmen und im Ausführungsbeispiel ein Getriebe im einem Übersetzungsverhältnis 1 : 1 bilden. Selbstverständlich könnte man zur Vermeidung großer Zahnraddurchmesser zwischen den beiden Zahnrädern 430 und 431 Zwischenräder vorsehen oder ein Rollenkettengetriebe verwenden.

Bei den in Fig. 9 dargestellten Abmessung bewegt sich die Drehachse 401' der Pleuelstange 401 auf der strichpunktiert dargestellten Kurve 432, und zwar in Richtung des Pfeiles 433, wenn sich die Wangen 404 in Richtung des Pfeiles 434 bewegen. Vorteilhaft ist bei einem derartigen Kurbeltrieb nicht nur, daß die zur Abstützung des Hebels 426 erforderliche Kraft mittels des Hilfskurbeltriebes in ein Drehmoment umgewandelt wird, das zu dem Drehmoment des Hauptkurbeltriebes addiert wird. Bei Mehrzylindermaschinen ergibt sich ein weniger komplizierter Aufbau gegenüber einer Abstützung des Hebels 426 am Gehäuse des Kurbeltriebs. Außerdem kann die Koppelung der beiden Kurbeltriebe statt zwischen den Kurbelwangen am Wellenende erfolgen. Durch die quer zur Hubrichtung - schmale Bahn 432 der Drehachse 401' wird die auf den Kolben einwirkende Kraft bei minimaler Auslenkung der Pleuelstange 201' übertragen. Hierdurch reduzieren sich auch die Führungskräfte zwischen Kolben und Zylinderwand und damit die Reibungskräfte zwischen diesen beiden Teilen. Schließlich kann das nutzbare Drehmoment über einen Drehwinkel der Hauptachse 412 aufgenommen werden, der mit etwa 200° wesentlich größer ist als bei einem konventionellen Kurbeltrieb mit 180°. Daher liegt im Falle eines Verbrennungsmotors das abgegebene Drehmoment in einem Winkelbereich von 150° über demjenigen eines konventrionellen Kurbeltriebes.

Alle in der vorstehenden Beschreibung erwähnten sowie auch die nur allein aus der Zeichnung entnehmbaren Merkmale sind als weitere Ausgestaltungen Bestandteile der Erfindung, auch wenn sie nicht besonders hervorgehoben und insbesondere nicht in den Ansprüchen erwähnt sind.

## Ansprüche

1. Kurbeltrieb, insbesondere für Hubkolbenmaschinen, mit einer Hauptachse und mit wenigstens einer Pleuelstange, deren einer Endabschnitt sich auf einer geradlinigen Bahn bewegt und deren anderer Endabschnitt eine Drehachse aufweist, die sich längs einer in sich geschlossenen Bahn bewegt, dadurch gekennzeichnet, daß die Bahn der Drehachse (1'; 101'; 201'; 301'; 401') einen veränderlichen Abstand von der Hauptachse (12; 112; 212; 312; 412) hat.

2. Kurbeltrieb nach Anspruch 1, dadurch gekennzeichnet, daß die Bahn der Drehachse (1'; 101'; 201'; 301'; 401') in dem dem Arbeitshub entsprechenden Teilabschnitt zumindest in einem Teilbereich einen größeren Abstand von der Hauptachse (12; 112; 212; 312; 412) hat als eine Kreisbahn um die Hauptachse mit einem dem Hub des sich auf einer geradlinigen Bahn bewegenden Endabschnittes der Pleuelstange (1; 101; 201; 301; 401) entsprechenden Durchmesser.

3. Kurbeltrieb nach Anspruch 1 oder 2, dadurch gekennzeichnet, daß die Drehachse (1'; 101') der Pleuelstange (1; 101) durch den Kurbelzapfen (3, 3', 3"; 103, 103', 103") einer Kurbelwelle gebildet ist, welcher Kurbelzapfen mit einem zu dem die Pleuelstange (1; 101) tragenden Abschnitt (3'; 103') exzentrischen Abschnitt (3"; 103") drehbar in wenigstens einer Wange (4; 104) gelagert ist, wobei auf diesem drehbar gelagerten Abschnitt (3'; 103') drehfest ein erstes Rad (7; 107) angeordnet ist, das mit einem koaxial zur Hauptachse (12; 112) angeordneten zweiten Rad (8; 108) in Getriebeverbindung steht.

4. Kurbeltrieb nach Anspruch 3, dadurch gekennzeichnet, daß das erste Rad (7) ein mit dem als Stirnzahnrad ausgebildeten zweiten Rad (8) kämmendes Stirnzahnrad ist.

5. Kurbeltrieb nach Anspruch 3 oder 4, dadurch gekennzeichnet, daß das zweite Rad (8) ein stillstehendes Rad ist.

6. Kurbeltrieb nach Anspruch 3 oder 4., dadurch gekennzeichnet, daß das zweite Rad (108) drehfest auf einer koaxial zur Hauptachse (112) angeordneten und relativ zu dieser verdrehbaren Hilfswelle sitzt.

7. Kurbeltrieb nach einem der Ansprüche 3 bis 6, dadurch gekennzeichnet, das Übersetzungsverhältnis des das erste und das zweite Rad (7, 8; 107, 108) aufweisenden Getriebes 1 : 1 oder 1 : 2 gewählt ist.

8. Kurbeltrieb nach Anspruch 1 oder 2, dadurch gekennzeichnet, daß die Bahn der Drehachse (201') durch eine stillstehende Führungsbahn (220) definiert ist und daß mit der Pleuelstange (201) - schwenkbar ein Kurbelarm (204) verbunden ist, der eine sich selbst auf den durch die Führungsbahn (220) bestimmten Abstand der Drehachse (201') der Pleuelstange (201) von der Hauptachse (212) einstellende effektive Länge hat.

9. Kurbeltrieb nach Anspruch 1 oder 2, dadurch gekennzeichnet, daß ein mit der Hauptachse (305, 312) drehfest verbundener Kurbelarm (304), an dessen von der Hauptachse wegweisenden Endabschnitt die Pleuelstange (301) angelenkt ist, aus wenigstens zwei in Längsrichtung des Kurbelarms relativ zueinander verschiebbaren Teilen besteht und an diesen Teilen oder der Hauptachse und der Drehachse der Pleuelstange ein längenveränderbares Stellelement (325) angreift.

10. Kurbeltrieb nach Anspruch 1 oder 2, dadurch gekennzeichnet, daß die Drehachse (401') der Pleuelstange (401) über ein Hebelgetriebe (426) mit einem sich auf einer Kreisbahn um die Hauptachse (412) bewegenden Kurbelzapfen (403) verbunden ist.

11. Kurbeltrieb nach Anspruch 10, dadurch gekennzeichnet, daß das Hebegetriebe aus einem einzigen Hebel (426) besteht und daß an dem aus diesem Hebel (426) und der Pleuelstange (401) gebildeten Kniehebel im Abstand von dessen beiden Enden eine Hilfspleuelstange (427) eines Hilfskurbeltriebes angelenkt ist, welches in Getriebeverbindung mit dem anderen Kurbeltrieb steht.

12. Kurbeltrieb nach einem der Ansprüche 1 bis 11, gekennzeichnet durch wenigstens einen Kurbelarm (104) im Form einer kreisrunden Scheibe, die im Bereich ihres äußeren Randes um die Hauptachse (105, 112) drehbar gelagert ist.

13. Kurbeltrieb nach Anspruch 12, dadurch gekennzeichnet, daß die Scheibe als Ringscheibe ausgebildet ist.

14. Kurbeltrieb nach Anspruch 12 oder 13, dadurch gekennzeichnet, daß die Scheibe aus einem keine Schmierung benötigenden Material, insbesondere aus keramischen Material besteht.

Fig.1

Fig.3

Fig.2

# Fig.4

M. SCHENK.....                    Reg-Nr.:127 051A

**0 272 522**

Fig.5

Fig.7

Fig.6

201

221

204'

204

203

222

204'

204

205

205

222

212

220

205

204

204'

201

203

201'

0 272 522

# Fig. 8

# Fig. 9

0 272 522

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | DE-C- 164 819 (HARPNER) <br> * ganzes Dokument * <br> --- | 1-7 | F 01 B 9/02 <br> F 02 B 75/04 |
| X | FR-A- 761 656 (CHOPIN) <br> * ganzes Dokument * <br> --- | 1-7 | |
| X | US-A-1 875 838 (WINCKLER) <br> * ganzes Dokument * <br> --- | 1-6 | |
| X | US-A-4 152 955 (McWHORTER) <br> * Zusammenfassung; Figuren 1-7 * <br> --- | 1,2 | |
| X | FR-A-2 000 950 (SHIZUOKA UNIVERSITY) <br> * Seite 12, Zeile 35 - Seite 14, Zeile 9; Figur 8 * <br> --- | 1,2,12 | |
| X | US-A-4 211 190 (INDECH) <br> * ganzes Dokument * <br> --- | 1,2,8 | |
| X | DE-C- 122 102 (DE ROOSTER) <br> * ganzes Dokument * <br> --- | 1,2,8 | RECHERCHIERTE SACHGEBIETE (Int. Cl.4) |
| P,X | SOVIET INVENTIONS ILLUSTRATED, Sektion Mechanik, Woche 8704, 28. Januar 1987, Zusammenfassungsnr. 028209 Q64, Derwent Publications Ltd., London, GB; & SU - A - 1 234 691 (KAZA POLY) 30.05.1986 (Kat. X) <br> --- | 1,2,9 | F 01 B 9/00 <br> F 02 B 75/00 <br> F 16 H 21/00 |
| X | DD-A- 46 919 (KREISEL) <br> * Spalte 4, Zeile 36 - Spalte 5, Zeile 5; Figuren 1, 2 * | 1,2 | |
| A | --- -/- | 9 | |

Der vorliegende Recherchenbericht wurde für alle Patentansprüche erstellt

| Recherchenort | Abschlußdatum der Recherche | Prüfer |
|---|---|---|
| BERLIN | 11-02-1988 | GERTIG I. |

Europäisches
Patentamt

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | CH-A- 356 651 (SCHJELDAHL CO.) * Seite 2, Zeile 95 - Seite 3, Zeile 9; Figur 2 * --- | 1,2 | |
| A | CH-A- 356 651 --- | 9 | |
| X | DE-C- 440 465 (ANDREAU) * ganzes Dokument * --- | 1,2,10, 11 | |
| X | AT-B- 131 931 (V. PEJICIC) * ganzes Dokument * --- | 1,2,10, 11 | |
| X | US-A-3 176 671 (STINEBAUGH) * Figuren 1, 4 * --- | 1,2,10, 11 | |
| A | EP-A-0 184 042 (POLITECHNIKA WARSZAWSKA) ----- | | |

RECHERCHIERTE
SACHGEBIETE (Int. Cl.4)

Der vorliegende Recherchenbericht wurde für alle Patentansprüche erstellt

| Recherchenort | Abschlußdatum der Recherche | Prüfer |
|---|---|---|
| BERLIN | 11-02-1988 | GERTIG I. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
................................................................
& : Mitglied der gleichen Patentfamilie, übereinstimmendes Dokument

EPO FORM 1503 03.82 (P0403)